# EUROPEAN PATENT SPECIFICATION

(11) **EP 1 772 113 B1**
(45) Date of publication and mention of the grant of the patent: **05.09.2012**
(21) Application number: 06380134.4
(22) Date of filing: 25.05.2006
(51) Int. Cl.: A61C 8/00

(54) **A set of one-piece angled abutments**
Satz von einteiligen abgewinkelten Aufbauteilen
Un jeu de butées inclinées monoblocs

(30) Priority: 10.10.2005 ES 200502461
(43) Date of publication of application: 11.04.2007
(73) Proprietor: Faus Badia, Vicente Gabriel, 46021 Valencia (ES)
(72) Inventor: Faus Badia, Vicente Gabriel, 46021 Valencia (ES)
(74) Representative: Ungria Lopez, Javier

(56) References cited:
- WO-A-03/028580
- JP-A- 2005 052 175
- US-A- 5 030 095
- US-A- 5 052 929
- US-A1- 2002 031 749

## Description

### Object of the invention

This invention refers, as expressed in the title of this descriptive narrative, to a set of angled implant abutment configured in one piece. Set of one-piece angled abutments method of use thereof is discussed.

Basically, the prosthesis comprises generally an implant attached to the bone of the patient's mandible and an abutment's stump, or angled pillar, or prosthetic implant also attached to the implant, to which the corresponding and matching dental piece will be attached.

Understanding this as a basic premise, the main objective of this invention is to obtain an angled abutment configured in one piece to avoid loosening through time of the through screw of the traditional prosthetic implants.

Another objective of the invention is to attain, by specific means, the desired tilt angle and plane of the abutment in relation to the dental piece in question.

A third objective of the invention is focussed on the method of affixing the angled abutment or implant system, which is achieved by a special tool or key.

### Background of the invention

Implant systems usually entail two types of pillars o prosthetic abutments' stumps to configure the fixed cemented prosthesis:
- Straight abutments
- Angled abutments

There are, generally, two types of straight abutments, those configured in one piece or those configured as a two parts piece. One piece abutments have the threaded portion and the emergent or prosthetic piece joined forming one piece.

Two piece abutments have a hexagon or an octagon inside the implant that fits the hexagonal platform placed in the lower side of the emergent piece and thus prevents the emergent piece from gyrating. This piece is hollow throughout and is internally traversed by a screw that affixes it to the implant (through screw).

Angled abutments are only manufactured in two pieces and follow the same principle as the two piece pillars.

There is a great diversity of hexagonal head screwdrivers which function is to screw the angled or straight portion to the implant.

On the other hand, an abutment, whether straight o angled, in two pieces will be screwed in a central position by means of the described through screw that is affixed in a central manner, which implies it is easy to use. However, with the passing of time and due to the action of grease, the through screw begins to loosen. Vibration caused by mastication forces and the fat contained in foodstuffs that filters through the joint between the implant and the false prosthetic abutment or prosthetic pillar o prosthetic implant also influence the loosening of the screw.

Another disadvantage of this system is that, although fitting the hexagon of the false prosthetic abutment to the implant outside the patient's mouth is easy, it becomes difficult when the implant is already set in place in the bone and under the gum, since soft tissue gets in the way and the slightest interposition of tissue makes for an imperfect fit, obstructing the passage of the through screw, which creates subsequent problems such as the loosening and fracture of the Titanium.

Document US 2002/031749 A1 describes a An abutment for use with an implant placed in a bone of a patient comprising a mounting portion for receipt in an implant, a central portion having a smoothly curved outer surface and a prosthetic mounting post extending from the central portion, the post being generally cylindrical and tapered with a decreasing circumference as the distance from the central portion increases, the post having an inboard side at the central portion and an outboard side at a distal free end of the post, the post formed with a locking step of increased circumference on the outboard side of the step relative to the circumference on the inboard side of the step, the step being formed at a given distance from the central portion.

Document JP 2005 052175 A describes an angled abutment having a few numbers of components and having high strength and to provide the angled abutments, an implant and a dental implant easily adaptable to a dentition and a bite and providing a stable therapy in the dental implant. Said angled abutment is integrally formed with a first screw part which is threadedly engaged with a fixture, and an inclined projection part formed at a predetermined angle and provided with a denture structure. The cutting start position of a thread formed in the first screw part and the cutting start position of a groove of a second screw part formed in the fixture and threadedly engaged with the first screw part are formed in mutually different phases.

US 5,052,929 A describes a prosthetic abutment in one piece. Also it describes a cylinder for use in association with the fabrication of a custom dental prosthesis wherein a dental technician has to solve the angle problem. (See fig. 3a - showing an example of what does the dental technician do). Summarising, this document describes an abutment that can be shaped from a straight cylinder.

Document US 5,030,095 A describes a prosthetic abutment in two different pieces.

Document WO 03/028580 A describes best implant.

### Description of the invention

To attain the stated objectives and avoid the disadvantages mentioned in the above paragraphs, this invention proposes a set of one-piece angled abutments according to claim 1 and a box according to claim 3. An angled abutment has its own means of attachment to an implant, placed in the mandible's bone of a patient, that can then receive the appropriate dental piece.

A second characteristic is the specific means to orient the abutment's tilt in the desired radial plane according to the placement of the implant in the maxillary bone inside the patient's mouth.

Said plane coincides with the definitive position of the prosthetic abutment, in such a manner that the abutment has a lower portion that is threaded so it can be coupled with the also threaded complementary orifice, of the implant. Therefore, both the tilting of the upper part of the prosthetic abutment and the threaded lower portion will be contained in said radial plane. The abutment's stump includes a short base perpendicular to the threaded portion, from which said threaded portion arises.

The method of use is characterized in that it incorporates a special key that adapts to the tilt of the abutment counteracting it, and above its base, in such a manner that the key is arranged in the same direction of the lower threaded part or in a parallel direction close to the direction of said lower portion.

In order to achieve this, the key is characterized in that it has a tubular section provided with a lateral window through which part of the tilted abutment peeks out. The upper part of the key above the lateral window presents a structure that allows manual handling or handling with a tool, to make the twisting or turning manoeuvre easier when tightening the abutment during the threading step that affixes it to the implant.

The method of use is characterized in that the orientation of the prosthetic abutment depends on the structure of the lower threaded portion of said prosthetic abutment.

The method is based on a set of prosthetic abutments in which the starting point of the thread is slightly different for each of them, which serves to attain a different threading angle for each that facilitates achieving the desired orientation or tilt of the prosthetic abutment's stump or pillar.

This variation spans one round of the initial thread section of the lower abutment portion. The desired orientation can also be achieved by varying the length of the lower portion in very minute values.

The method of use is complemented with a similar additional implant. The first implant is inserted in the maxillary bone of the patient and another similar additional implant that is not inserted in the bone serves as trial sample to try out and ensure the correct orientation of the abutment before it is coupled to the definitive implant inserted in the patient's maxillary bone.

The drawings below will serve to better understand the invention and method of use thereof. These drawings, that are an integrated part of the present document, are to be understood as illustrative but not limiting of the scope of the invention.

### Brief description of the drawings

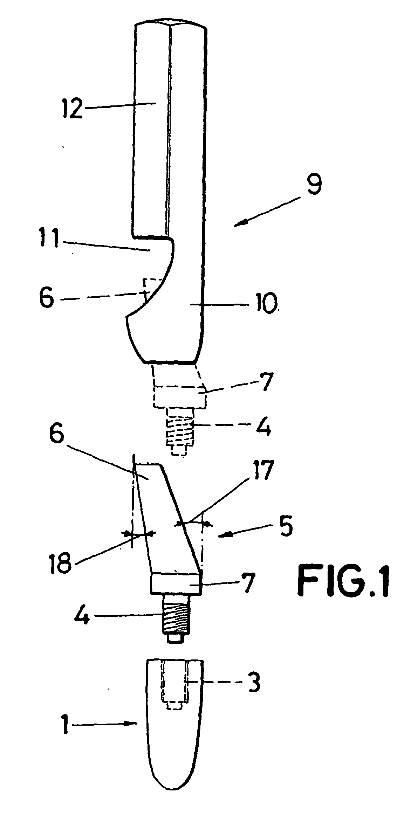

- **Figure 1**: Shows an exploded view of an angled prosthetic implant and method of use thereof.

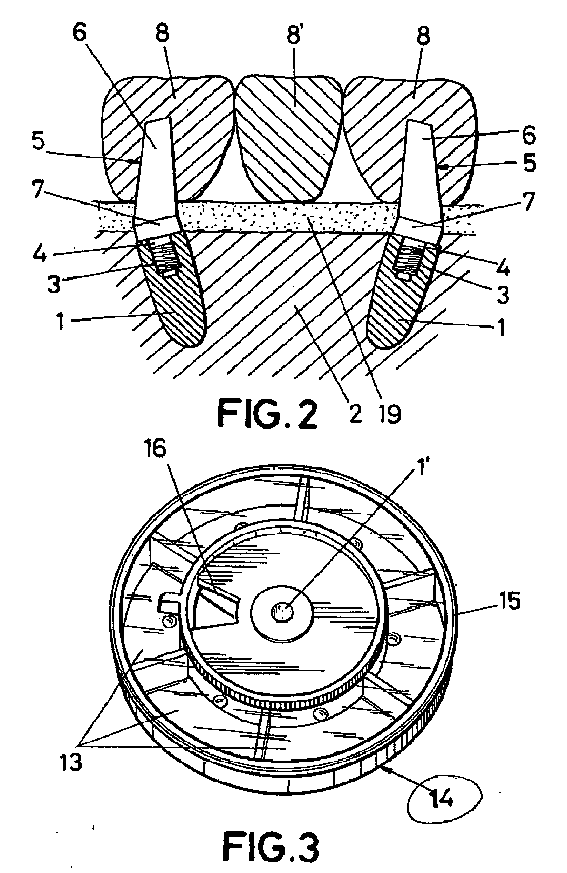

- **Figure 2**: Shows a view of the application of the prosthesis.
- **Figure 3**: Shows a view of a compartmentalized box housing a set of angled abutments. This box is part of the invention.

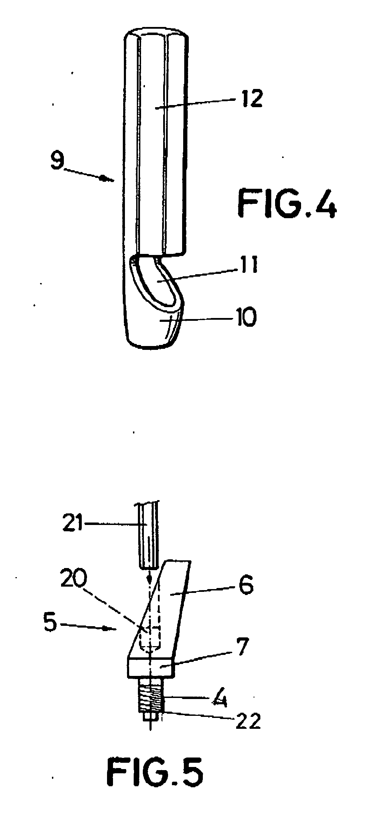

- **Figure 4**: Shows a perspective view of a special key.
- **Figure 5**: Shows a view of a prosthetic implant tightened with a traditional key.

### Description of the preferred embodiment

Using the same number codes as those that appear in the Figures, the angled prosthetic implant is defined by an implant 1 affixed to the mandible 2 of a patient's bone, where said implant 1 has a threaded orifice 3 to which is coupled a lower threaded section 4 that is part of a mono-piece angled abutment 5 with a tilted stump portion 6 having a truncated cone structure that rises out of a short intermediate cylindrical portion 7 and from which its free base starts said threaded portion 4.

The required dental piece 8 will be affixed over said prosthetic abutment's stump 6.

Coupling and affixing of the abutment 5 is done, first, by a special key 9 that has, at the least, one tubular lower portion 10 provided with a lateral window 11 and an hexagonal, or any other geometrical configuration, cross-section upper portion 12 which function is to aid the handling of said key 9 so it can be turned to thread the abutment 5 onto the appropriate implant 1.

To do this, the tilted abutment's stump 6 is inserted first in the inner space of the lower tubular portion 10 of key 9 until it peeks out of the lateral window 11, at which point, key 9will be placed pointing in the same direction than the lower threaded portion 4 and acting as a continuation of said portion. Once in this position, the procedure can continue by coupling and affixing the angled abutment 5, threading it by turning the key 9, which motion will obviously drag with it the abutment 5.

To obtain the desired angle or tilt of abutment 5 in relation to the axis of rotation of its threaded portion 4, the starting point of the threading of this portion will vary in a 360° angular space in as many partial angle portions as desired by the manufacturer or the designer.

Another manner to obtain the desired tilt could be to increase or decrease the height of the short intermediate cylindrical portion 7 using as reference point its lower base, from which threaded portion 4 arises.

The prosthesis featured by this invention presents, amongst others, one first advantage by having a structure of greater solidity achieved by the angled abutment being in one piece, and a second advantage that resides in that the abutment is affixed by threading it with a rotational motion, and therefore it will never be badly installed, even when soft gum tissue 19 gets in the way, since the threading motion serves to remove the tissue from the gum as it progresses.

The special key 9 threads the angled abutment 5 in a centrally oriented manner when the abutment is already set in place inside the tubular portion 10 of key 9 and peeking out lateral window 11

This fitting of the abutment and the key absorbs the angulation retaining it in place inside the key so placement is not lost during the time prior to actual installation, which is the most delicate stage of the procedure, since the piece could fall inside the patient's mouth cavity causing the expected problems.

Once the prosthesis set is assembled its immobilization is ensured by the mono-piece abutment structure that includes the tilted stump 6 of the abutment and the threaded portion 4, in such a manner that the dental piece will abut tangentially against an adjacent dental piece 8' to prevent its unthreading.

The tilted stump presents a truncated conical cross section that when relating it to the plane of the direction of the stump creates a first major angle 17 between and axial line of the stump and a perpendicular line parallel to the threaded potion, containing said line and said axial line within the plane.

A second minor angle 18 is also generated between a second axial line contained in said plane and another perpendicular line such as the one mentioned in the previous paragraph.

In order to encompass any desired angle position of the abutments, sets of like abutments may be included which final rotating angular variation after being tightened is, for instance, 12°, 15°, 30°, 60°, or any other value. The last one resembles a hexagon.

This set of abutments will be located in independent compartments 13 of a box 14 provided with a transparent and rotating lid 15 with a through hole 16 that allows the selection and extraction of the desired abutment.

To this effect every compartment will contain a group of prosthetic abutments of a specific angular variation.

Also, in the centre of box 14 there is a coupling base acting as fixed implant 1' to be used as reference and control check for the selected prosthetic abutment.

The prosthetic abutment's stump 6 can incorporate a cavity 20 with any given section different from the circular section that will fit the appropriate tightening key 21.

## Claims

1. A set of one-piece angled abutments, whereby the abutments are affixable to an implant by threading means, each one-piece angled abutment (5) included in the set comprising a lower threaded portion (4), a short cylindrical intermediate portion (7), and a tilted abutment stump (6) having a truncated cone structure which arises from the short intermediate cylindrical portion (7); the threaded portion (4) has a starting point of the thread (22), which is slightly different for each of the abutments (5), which serves to attain a different threading angle for each of the abutments that facilitates achieving the desired orientation or tilt of the prosthetic abutment's stump, and this variation spans one round of the initial thread section of the lower abutment portion.

2. A set according to claim 1, wherein the tilted abutment stump (6) further comprises a non-circular cavity (20) with a section different from the circular section.

3. A box of a set of one-piece angled abutments, as defined in claim 1 or 2, with independent compartments (13) containing the abutments ordered according to the angular offset, and the box (14) is further provided with a rotating lid (15) in which there is a through hole (16) to extract the selected abutments, the box in addition has a central coupling base acting as a fixed secondary implant (1') that serves to try out the position of the selected abutment.

## Patentansprüche

1. Set von einteiligen abgewinkelten Aufbauteilen (Abutments), wobei die Aufbauteile durch Gewindemittel an einem Implantat befestigt werden können, wobei jeder einteilige abgewinkelte Aufbauteil (5), der in dem Set beinhaltet ist, einen unteren Gewindeabschnitt (4), einen kurzen zylindrischen Zwischenabschnitt (7) und einen geneigten Aufbauteilstumpf (6), der eine abgestumpfte Struktur hat, die aus dem kurzen zylindrischen Zwischenabschnitt (7) entspringt, enthält, wobei der Gewindeabschnitt (4) einen Startpunkt des Gewindes (22) hat, der für jedes der Aufbauteile (5) geringfügig unterschiedlich ist, was dazu dient, für jeden der Aufbauteile einen unterschiedlichen Gewindewinkel zu erzielen, der es erleichtert, die gewünschte Ausrichtung oder Neigung des Stumpfs des Prothesenaufbauteils zu erreichen, und wobei diese Variation eine Runde des anfänglichen Gewindeabschnitts des unteren Aufbauteilabschnitts umspannt.

2. Set nach Anspruch 1, wobei der abgewinkelte Aufbauteilstumpf (6) ferner einen nicht-kreisförmigen Hohlraum (20) mit einem von dem kreisförmigen Bereich verschiedenen Bereich enthält.

3. Eine Box eines Sets von einteiligen abgewinkelten Aufbauelementen nach Anspruch 1 oder 2, wobei unabhängige Fächer (13) die Aufbauteile, geordnet nach der Winkelversetzung, enthalten und die Box (14) ferner mit einem sich drehenden Deckel (15) versehen ist, in dem es ein Loch (16) gibt, um die ausgewählten Aufbauteile herauszunehmen, wobei die Box außerdem eine mittige Kupplungsbasis hat, die als ein feststehendes sekundäres Implantat (1') fungiert, das dazu dient, die Position des ausgewählten Aufbauteils auszuprobieren.

## Revendications

1. Jeu de butées inclinées monoblocs, les butées pouvant être fixées à un implant à l'aide de moyens de vissage, chaque butée inclinée monobloc (5) incluse dans le jeu comprenant une partie filetée inférieure (4), une courte partie intermédiaire cylindrique (7) et un moignon de butée incliné (6) ayant une structure de cône tronqué qui dépasse de la courte partie intermédiaire cylindrique (7); la partie filetée (4) ayant un point de départ du filet (22) qui est légèrement différent pour chacune des butées (5), qui sert à atteindre un angle de filetage différent pour chacune des butées, ce qui facilite l'obtention de l'orientation ou de l'inclinaison désirée du moignon de butée prothétique, et cette variation s'étend sur un tour de la section filetée initiale de la partie inférieure de butée.

2. Jeu suivant la revendication 1, dans lequel le moignon inclinée de butée (6) comprend en outre une cavité non circulaire (20) d'une section non circulaire.

3. Boîte d'un jeu de butées inclinées monoblocs, tel que défini dans la revendication 1 ou 2, avec des compartiments indépendants (13) contenant les butées ordonnées selon le décalage angulaire, la boîte (14) comprenant en outre un couvercle rotatif (15) dans lequel il y a un trou de passage (16) pour extraire les butées sélectionnées, la boîte comportant en outre une base d'accouplement centrale agissant comme implant secondaire fixe (1') qui sert à essayer la position de la butée sélectionnée.
